**Europäisches Patentamt**

**European Patent Office**

**Office européen des brevets**

(19)

(11) Veröffentlichungsnummer: **0 131 763**
A2

## (12) EUROPÄISCHE PATENTANMELDUNG

(21) Anmeldenummer: **84106811.7**

(22) Anmeldetag: **14.06.84**

(51) Int. Cl.⁴: **A 01 C 7/08**
**A 01 C 5/06**

(30) Priorität: **14.06.83 DE 3321490**

(43) Veröffentlichungstag der Anmeldung:
**23.01.85 Patentblatt 85/4**

(84) Benannte Vertragsstaaten:
**AT BE CH FR GB IT LI NL SE**

(71) Anmelder: **Hacker, Josef**
**Schulstrasse 7**
**D-8254 Mittbach(DE)**

(72) Erfinder: **Hacker, Josef**
**Schulstrasse 7**
**D-8254 Mittbach(DE)**

(74) Vertreter: **Tiedtke, Harro, Dipl.-Ing. et al,**
**Patentanwaltsbüro Tiedtke-Bühling-Kinne-**
**Grupe-Pellmann-Grams-Struif Bavariaring 4 Postfach 20**
**24 03**
**D-8000 München 2(DE)**

(54) **Verfahren und Vorrichtung zum Säen von Feinsämereien in verfestigten Boden, insbesondere zum Nachsäen lückiger Grasflächen.**

(57) Bei einer Sä-Vorrichtung zum Säen von Sämereien in verfestigten Boden, insbesondere zum Nachsäen lückiger Grasflächen, mit einer oder mehreren Sä-Einheiten, jeweils umfassend eine Samen-Abgabeeinrichtung 22, 24, eine vorlaufende Mulden-Ausformeinrichtung 54 und eine nachlaufende Boden-Ausgleichseinrichtung 61 mit Abgabe von Samen 40 auf den Boden 56 der von der jeweiligen Mulden-Ausformeinrichtung 54 gebildeten Mulde 52, wird vorgeschlagen, ein Muldenboden-Druckelement 58 einzusetzen, zum Einstreichen der Samen 40 in den Muldenboden 56.

Die auf diese Weise gesäte Saat geht gut auf, da die eingestrichenen Samen zum einen gut belichtet und zum anderen gut befeuchtet werden u.a. auch aufgrund der Sammelwirkung der auf diese Weise gebildeten Mulde.

EP 0 131 763 A2

Fig.1

IIEDTKE - BÜHLING - KINNE - GRUPE
PELLMANN - GRAMS - STRUIF

Patentanw
Vertreter ?
Dipl.-Ing. H
Dipl.-Chem
Dipl.-Ing. I
Dipl.-Ing. I
Dipl.-Ing. B. Pellmann
Dipl.-Ing. K. Grams
Dipl.-Chem. Dr. B. Struif

Bavariaring 4, Postfach 20 24 03
8000 München 2
Tel.: 0 89 - 53 96 53
Telex: 5-24 845 tipat
Telecopier: 0 89 - 537377
cable: Germaniapatent München

**0131763**

14. Juni 1984

EP 4027

Josef Hacker

8254 Isen-Mittbach

Verfahren und Vorrichtung zum Säen von Feinsämereien in verfestigten Boden, insbesondere
zum Nachsäen lückiger Grasflächen

Die Erfindung betrifft ein Verfahren und eine Sä-Vorrichtung zum Säen von Feinsämereien in verfestigten
Boden nach dem Oberbegriff des Anspruchs 36 bzw. 1.

Das direkte Einsäen von Sämereien in verfestigten Boden
(z.B. gesetzter, ggf. gewalzter oder durch Regen zusätzlich verfestigter Acker, Wiese oder dergl.), ohne
vorheriges Umpflügen des Bodens, hat zum einen den Vorteil, daß eben dieses Umpflügen entfällt und zum anderen, daß die Bodenstruktur und der ggf. vorhandene
Bodenbewuchs weitgehend erhalten bleiben. Um lückige
Grasnarben zu schließen, kommt ausschließlich ein
direktes Nachsäen in Frage. Das Nachsäen von Grasnarben gewinnt zunehmend an Bedeutung, da bei intensiver Grünland-Bewirtschaftung (starke Düngung; kurzer
Zeitabstand zwischen aufeinanderfolgenden Grasschnitten)
vermehrt Grasnarben-Lücken auftreten.

Aus der DE-OS 27 34 803 ist eine Sä-Vorrichtung der eingangs genannten Art bekannt, bei welcher die Mulden-Ausformeinrichtung aus einem Paar nebeneinander angeordneter, nach unten schräg aufeinander zulaufender Schneidteller 15,16 besteht, welche eine im Querschnitt angenähert keilförmige Mulde in den Boden einschneiden. Die Samen-Abgabeeinrichtung 20,21 wirft die Samen auf den Muldenboden. Die nachfolgende Boden-Ausgleichseinrichtung in Form einer Walze 25 mit horizontaler, quer zur Fahrtrichtung verlaufender Achse, welche sich quer über die gesamte Sä-Vorrichtungsbreite erstreckt, drückt die Keil-Mulden wieder zusammen, so daß sich anschließend eine angenähert ebene Bodenfläche ausbildet. Die bekannte Vorrichtung dient dem Nachsäen von Grasflächen. Es hat sich nun herausgestellt, daß der Nachbewuchs von mit dieser bekannten Vorrichtung bearbeiteten Grasflächen relativ schwach und ungleichmäßig ist, insbesondere deshalb, weil die Samen häufig in zu große Tiefen gelangen und zudem die gewalzte Bodenschicht oberhalb der Samen ein Durchdringen der Samen zur Bodenoberfläche erschwert.

Aus der DE-AS 28 30 195 ist eine Sä-Vorrichtung für Direkt-Saat bekannt, bei welcher wiederum die nachlaufende Boden-Ausgleichseinrichtung 12 in Form einer Rolle für ein vollkommenes Schließen der Saat-Furchen sorgen soll (Spalte 5, Zeilen 36 - 38). Die Breite des zylindrischen Außenumfangs der Rolle ist dabei so gewählt, daß sie an den Rändern der in Querschnitt angenähert V-förmigen Mulde anliegt (Fig. 1). Dabei kann die Rollenachse zur Querrichtung geneigt verlaufen (Fig. 3 und 4).

Die Aufgabe der Erfindung liegt darin, eine Sä-Vorrichtung der eingangs genannten Art bereitzustellen, welche ein verbessertes Aufgehen der Saat gewährleistet.

Diese Aufgabe wird hinsichtlich des Verfahrens durch die kennzeichnenden Merkmale des Patentanspruchs 41 und hinsichtlich der Vorrichtung durch die kennzeichnenden Merkmale des Anspruchs 1 in Verbindung mit den Merkmalen des Oberbegriffs gelöst. Das erfindungsgemäße Muldenboden-Druckelement streicht den Samen in den Muldenboden, was zum einen sicherstellt, daß die Samen nicht austrocknen und zum anderen, daß die Samen unmittelbar unter der Mutterboden-Oberfläche oder mit dieser bündig abschließend zu liegen kommen. Diese Lage ist deshalb von Vorteil, weil hierdurch die für das Wachstum wichtige Lichteinwirkung gewährleistet ist, welche gerade bei einer Nachsaat von vorneherein eingeschränkt ist, da der bereits vorhandene Bewuchs wenigstens einen Teil des Lichtes abfängt. Aufgrund der beim Einstreichen und Glätten des Muldenbodens erfolgenden mehr oder weniger starken Verfestigung des Muldenbodens mit Formschluß der Samen ergibt sich eine verbesserte Feuchtigkeitszufuhr (Verbesserung der Kapillarwirkung). Schließlich fängt die Mulde bei natürlicher oder künstlicher Bewässerung das Wasser auf und hält es am Samen. Insgesamt ergibt sich ein zuverlässiges Aufgehen der Sämerei, da dieses in optimaler Lage unmittelbar an der Bodenoberfläche gehalten wird und nicht, wie bei bekannten Vorrichtungen, in mehr oder weniger großer Tiefe vergraben wird. Es ist auch eine Nachsaat bei gut angewachsener Wiesennarbe möglich.

Erfindungsgemäß wird also die Mulde offen gelassen, damit der Samen möglichst lange optimale Wachstumsbedingungen erhält.

Besonders einfacher Aufbau und zuverlässige Funktion ergibt sich bei einer Ausgestaltung des Muldenboden-Druckelements gemäß den Ansprüchen 3 und 4. Der Streichstab ist kostengünstig herzustellen; seine Krümmung gewährleistet zuverlässig ein Einstreichen der Samen, ohne die Gefahr eines Anbackens, beispielsweise von

Lehmbrocken.

Um dem Muldenverlauf jeweils möglichst genau folgen zu können, ist das Glättelement gemäß Anspruch 5 höhenverstellbar ausgebildet. Bevorzugt ist das Glättelement hierbei an der Mulden-Ausformeinrichtung höhenverstellbar angebracht, da die als solche bereits höhenverstellbare Boden-Ausformeinrichtung der Bodenform folgt, so daß sich wesentlich verringerte Verstell-Amplituden des Glättelements ergeben.

Die Höheneinstellung des Glättelements läßt sich gemäß den Ansprüchen 6 und 7 mit baulich einfachen Mitteln bei zuverlässiger Funktion mit der angegebenen Weise verwirklichen. Die Federvorspannung sorgt selbsttätig für einen gleichmäßigen Anpreßdruck des Glättelements am Muldenboden, im wesentlichen unabhängig vom jeweiligen Bodenverlauf.

Zur Öffnung verfestigter Böden werden üblicherweise Schneidscheiben in einfacher oder paarweiser Anordnung (s. z.B. DE-AS 28 30 195) verwendet. Nachteilig hieran ist der relativ große bauliche Aufwand (mechanisch relativ hoch belastbare Drehlager). Auch lassen sich auf diese Weise lediglich bestimmte Muldenquerschnitte (im wesentlichen V-Form) erreichen. Diese Nachteile beseitigt die Mulden-Ausformeinrichtung gemäß Anspruch 8. Der Boden-Öffnungskeil ist starr mit der Sä-Vorrichtung verbunden, so daß Drehlager entfallen. Die Muldenquerschnittsform läßt sich durch entsprechende Festlegung der Keil-Basisfläche frei bestimmen. Bevorzugt ist die Muldenquerschnittsform rechteckig. Der Streichstabquerschnitt kann dementsprechend rechteckig sein; bevorzugt ist der Stabquerschnitt kreisförmig mit einem der Muldenbreite entsprechenden Durchmesser, da man dann beim Einstreichen der Samen in den Muldenboden und Glätten des Muldenbodens einen gewissen Materialtransport erhält, der für den gewünschten Verfestigungsgrad sorgt. Davon abgesehen läßt sich ein Keil mit rechteckiger Keilbasisfläche besonders einfach herstellen. Die Rinnenform bei kreisförmigen Stabquerschnitt sorgt dafür, daß sich das Wasser an der tiefsten Stelle der Rinne sammelt, an welcher Stelle auch die Samen eingebaut sind. Um ein möglichst schonendes Einschneiden der Mulde in den bewachsenen Boden zu erreichen, bei gleichzeitiger Verringerung der erforderlichen Zugkraft für die Zugmaschine der Sä-Vorrichtung, wird ein Boden-Aufschlitzmesser gemäß Anspruch 9 vorgeschlagen.

Um auf jeden Fall ein Hängenbleiben von Pflanzenresten oder anderen Bodenbestandteilen am Keil zu verhindern, wird die Ausbildung der Schneidkante gemäß Anspruch 10 vorgeschlagen.

Um ein Hängenbleiben von Wurzeln und anderen Bodenbestandteilen an der Schneidkante auszuschließen, wird ein Neigungswinkel der Schneidkante gemäß Anspruch 11 vorgeschlagen. Bei einer derart flachen Neigung erreicht man, daß die meisten pflanzlichen Bodenbestandteile aufgrund des ziehenden Schnittes zerteilt werden; diejenigen Bestandteile, welche nicht zerschnitten werden, gleiten an der Schneidkante entlang, wobei die Mulden-Aushebeeinrichtung momentan angehoben wird.

Um mit baulichen einfachen Mitteln eine gleichmäßige Muldentiefe zu gewährleisten, wird eine Tiefen-Einstellplatte gemäß den Ansprüchen 12 und 13 vorgeschlagen. Auch hier ist wiederum im Gegensatz zu den bekannten Tiefeneinstelleinrichtungen mit Bodenrollen kein Drehlager erforderlich. Das Muldenboden-Druckelement kann mit geringen Einstellkräften gefahren werden, so daß sich der Muldenboden nicht allzu sehr verdichtet.

Um mit baulichen einfachen Mitteln bei mechanisch robustem Aufbau die Mulden-Ausformeinrichtung tiefenverstellbar zu machen, werden die Maßnahmen gemäß der Ansprüche 14 - 16 vorgeschlagen. Die Vorspannung der Einstelleinrichtung sorgt wiederum dafür, daß die Mulden-Aushebewerkzeuge, der Bodenform folgend, mit im wesentlichen gleichmäßiger Kraft in den Boden gedrückt werden, wobei ggf. die Tiefen-Einstellplatte gemäß Anspruch 13 nach Art eines Anschlages für konstante Eindringtiefe sorgt.

Gemäß den Ansprüchen 17 und 18 ist eine Boden-Druckfeder vorgesehen, welche von einer Druckfeder-Führungsstange geführt ist, so daß ein Abknicken der aufgrund des großen möglichen Hubs und der erforderlichen großen Andrückkräfte relativ langen Schrauben-Druckfeder verhindert. Eine Verstellung der Vorspannkraft wird durch die Merkmale des Anspruchs 18 mit einfachen Mitteln ermöglicht.

Die vorstehend beschriebene Sä-Vorrichtung zum Säen von Sämereien in verfestigten Boden kann als solche von vornherein für diesen Zweck entsprechend den angegebenen Merkmalen hergestellt werden. Alternativ hierzu kann man jedoch auch eine herkömmliche Sä-Vorrichtung zum Säen von Sämereien, beispielsweise in Ackerboden, verwenden, wobei dann gemäß Anspruch 19 die als lösbare Anbauteile ausgebildeten erfindungsgemäßen Mulden-Ausformeinrichtung und Boden-Ausgleicheinrichtungen an die Sä-Vorrichtung anzubauen sind, falls beispielsweise Grasnarben nachzusäen sind. Nach erfolgter Nachsaat kann dann die Sä-Vorrichtung entsprechend ihrer ursprünglichen Zweckbestimmung verwendet werden. Um den An- und Abbau zu vereinfachen, kann gemäß Anspruch 20 ein ein- oder mehrteiliger Anbaurahmen vorgesehen sein, welcher gemäß Anspruch 21 schnell und einfach über Steck-Kupplungen mit der herkömmlichen Sä-Vorrichtung verbindbar ist.

Der Anbaurahmen kann aus einem vorderen Anbaurahmenteil gemäß den Ansprüchen 22 und 23 und einem hinteren Anbaurahmenteil gemäß Anspruch 24 ausgebildet sein.

Man erspart sich eigens anzubauende Sahmen-Abgabeeinrichtungen, wenn man die Sä-Scharen der herkömmlichen Sä-Vorrichtung gemäß Anspruch 25 als Samen-Abgabeeinrichtungen bei anmontierten Anbauteilen einsetzt.

Der Funktionswechsel der Sä-Scharen läßt sich mit einfachen Mitteln gemäß Anspruch 26 durchführen.

Um bei angehobener Sä-Schar die Samen zuverlässig auf den Muldenboden ablegen zu können, wird ein Abweisblech gemäß Anspruch 27 vorgeschlagen. Eine bevorzugte Muldenform ergibt sich aus Anspruch 28.

Die Erfindung betrifft auch einen Anbausatz für Sä-Maschinen zum Erhalt einer Sä-Vorrichtung nach einem der vorstehend behandelten Ansprüche mit anbaubaren Mulden-Ausformeinrichtungen und Boden-Ausgleichseinrichtungen, entsprechend der vorstehend beschriebenen Sä-Vorrichtung (Ansprüche 29 und 30).

Die Erfindung wird im folgenden an einem bevorzugten Ausführungsbeispiel an Hand der Zeichnung erläutert.

Es zeigt:

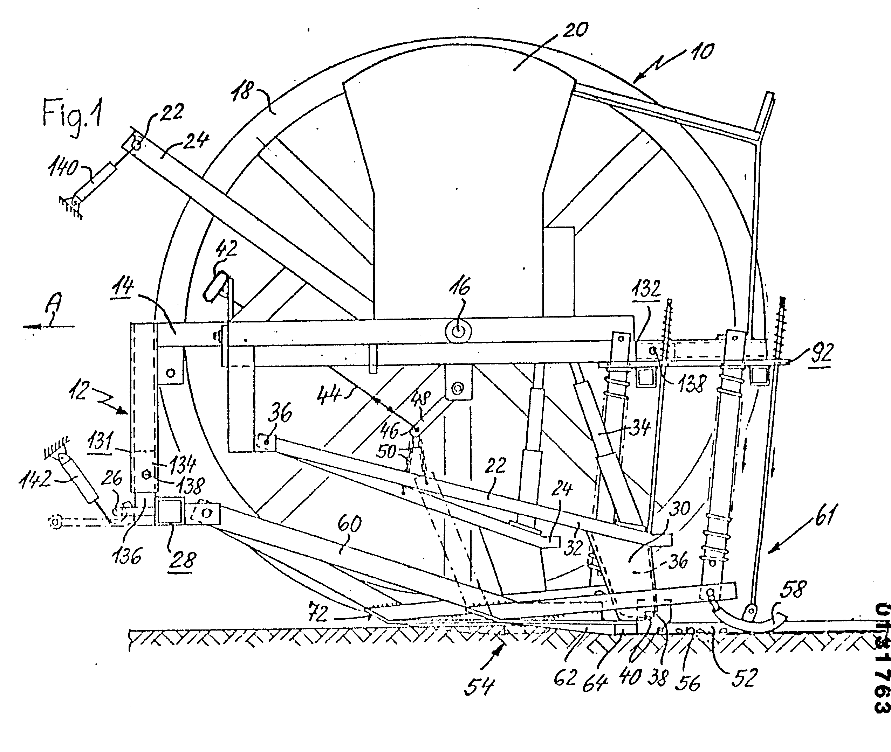

Fig. 1    eine vereinfachte Seitenansicht einer Drillmaschine mit erfindungsgemäßen Nachsä-Anbausatz;

**0131763**

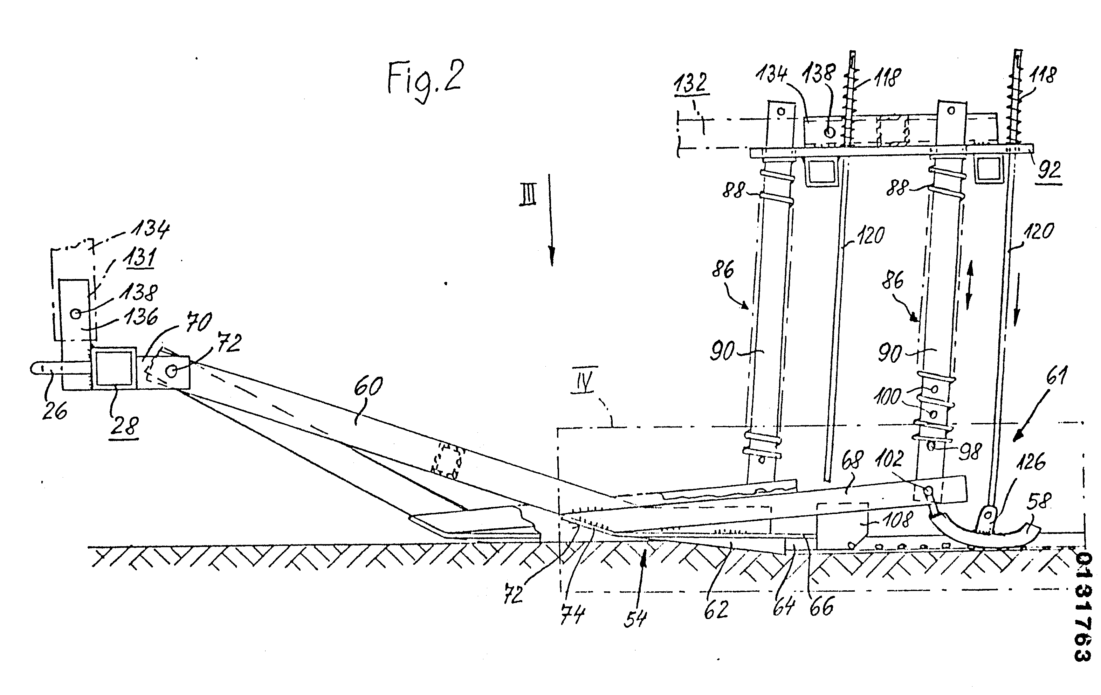

Fig. 2    eine Seitenansicht entsprechend Fig. 2
auf den Anbausatz mit weggelassener Drillmaschine;

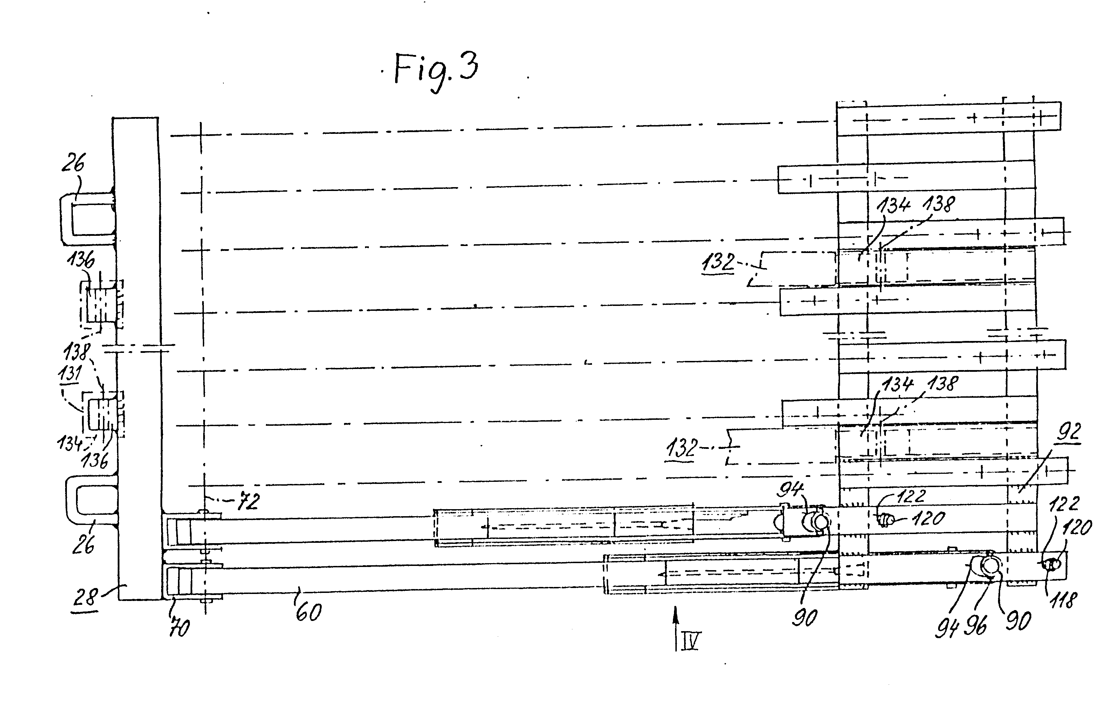

Fig. 3    eine Draufsicht auf den Anbausatz gemäß
Fig. 2 (Blickrichtung III in Fig. 2);

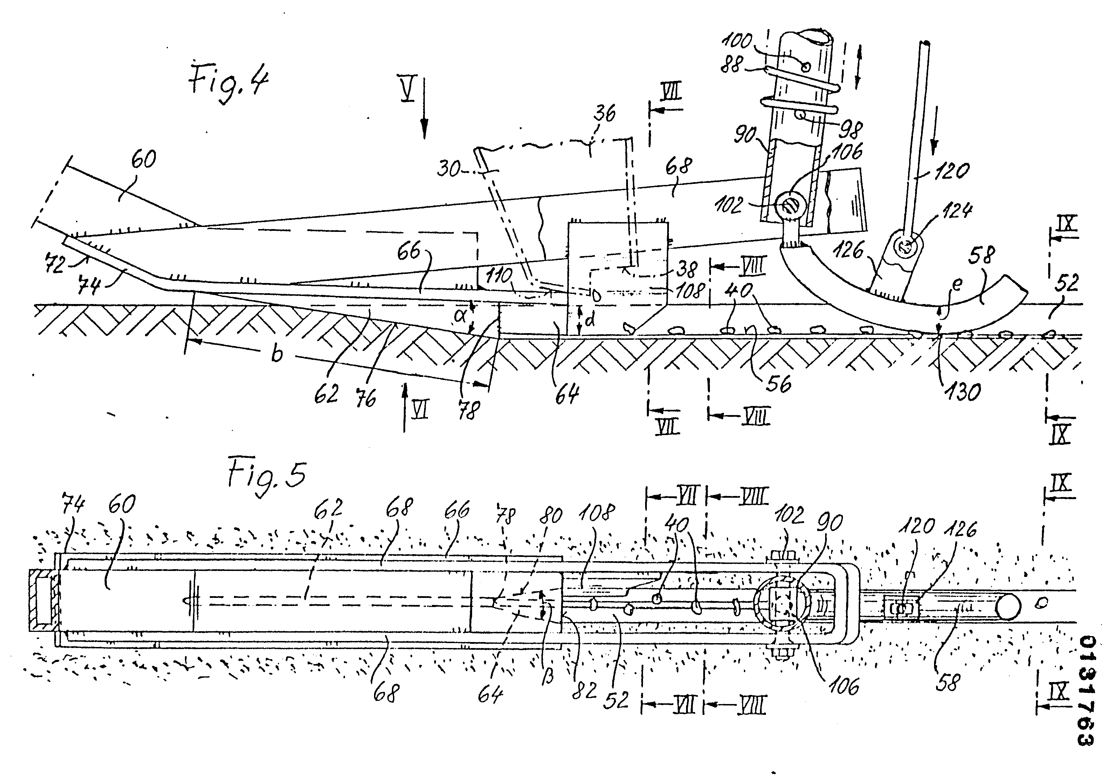

Fig. 4    das Detail IV in Fig. 2 in vergrößertem
Maßstab;

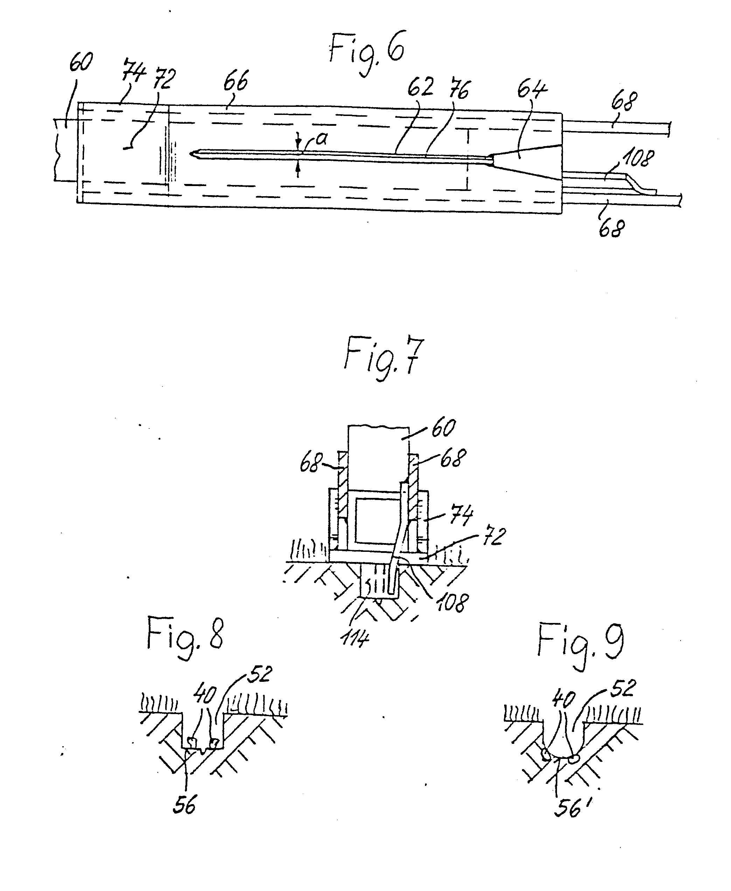

Fig. 5    eine Draufsicht auf das Detail gemäß Fig. 4
(Blickrichtung V in Fig. 4);

Fig. 6    eine Unteransicht des Details in Fig. 4
Blickrichtung VI in Fig. 4);

Fig. 7    einen Detailschnitt nach Linie VII-VII
in den Fig. 4 und 5;

Fig. 8    einen Schnitt durch die mit Samen versehene Bodenmulde vor dem Einstreichen der
Samen und Glätten des Muldenbodens
(Schnittlinie VII-VII in den Fig. 4 und 5)
und

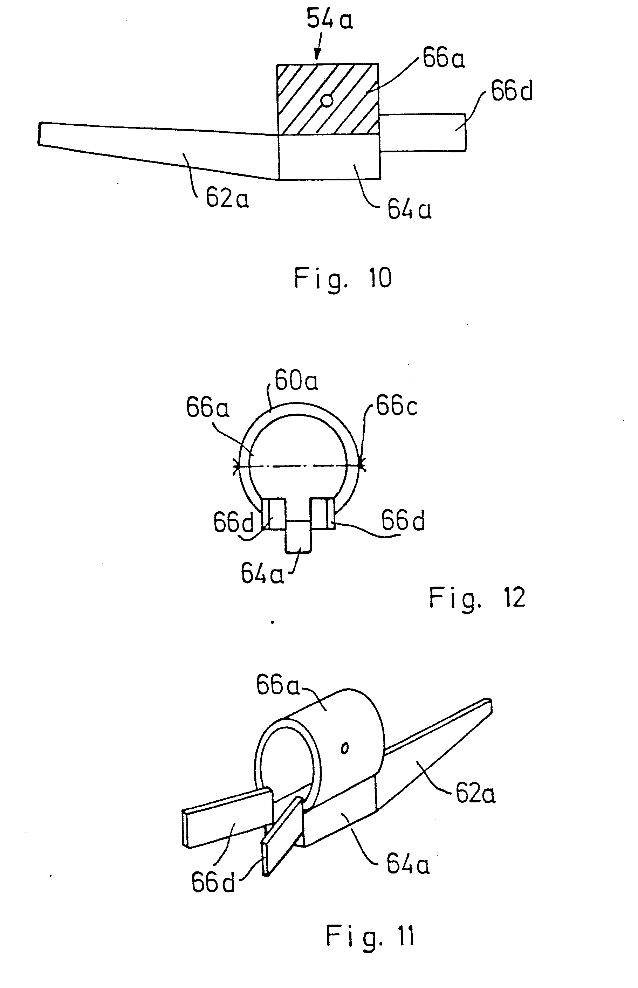

Fig. 9    einen Schnitt durch die Bodenmulde gemäß
Fig. 8 nach dem Einstreichen der Samen.[*]

[*]
Die im folgenden an Hand der Fig. zu beschreibende
Drillmaschine 10 mit Nachsä-Anbausatz 12 dient dem
Direkt-Säen von feinem Saatgut in verfestigten Boden.
Als Saatgut kommen Grassamen, Kräutersamen, Feldfruchtsamen, Gewächssamen oder dergl. in Frage. Man kann die
mit dem Anbausatz 12 versehene Drillmaschine 10 auch
zum Nachsäen eines vorhandenen Bewuchses verwenden, insbesondere zum Nachsäen von Grasnarbe. Bei der heutzutage üblichen intensiven Graswirtschaft treten verstärkt Lücken in der Grasnarbe auf, sei es aufgrund hoher Stickstoffgaben oder aufgrund mechanischer Beschädigung des Bewuchses. Aufgrund der hohen Schnittfrequenz kommt es nicht mehr zu einer Ausreifung der Grassamen, so daß eine Eigenverjüngung der Wiese nicht stattfindet und diese verkrautet. Die erfindungsgemäße Drillmaschine erlaubt ein Nachsäen zum Schließen dieser Grasnarben.

Die Drillmaschine 10 zum herkömmlichen Säen in Ackerboden besteht aus folgenden Handbestandteilen: einem Maschinenrahmen 14, einem am Rahmen 14 mit horizontaler, quer zur Fahrtrichtung A verlaufender Achse 16 drehbar gelagerten Drillmaschinen-Rad 18 (jeweils eines an beiden Querenden der Maschine), einem Saatgut-Vorratsbehälter 20 sowie Sä-Scharen 22,24, welche in zwei in Fahrtrichtung A hintereinanderliegenden Reihen gegeneinander versetzt am Rahmen 14 gehaltert sind.

Der Rahmen 14 ist über eine Dreipunkt-Ankopplung mit einem nicht dargestellten Zugfahrzeug verbunden. Der obere Ankoppelpunkt 22 wird gemäß Fig. 1 vom freien Ende einer schräg nach vorne oben verlaufenden, mit dem Rahmen 14 starr verbundenen Stange 24 gebildet. Die beiden unteren, auf gleicher Höhe liegenden Anlenkpunkte werden gemäß den Fig. 1 - 3 von U-förmigen Bügeln 26 gebildet, welche an einem vorderen Anbaurahmenteil 28 in Form eines horizontalen, quer zu Fahrtrichtung verlaufenden Kastenprofilrohrs angeschweißt sind. Im Normalzustand der herkömmlichen Sä-Vorrichtung 10 (ohne Anbausatz 12) ist die Sä-Vorrichtung 10 an das Zugfahrzeug entweder lediglich an einem Punkt angekoppelt, oder wiederum nach Art einer Dreipunkt-Ankopplung. In letzterem Falle können die unteren Anlenkpunkte entweder von nicht dargestellten, stets am Rahmen 14 vorgesehenen Ankoppelelementen gebildet sein oder von Bügeln, entsprechend den Bügeln 26, welche an einem, anstelle des Anbaurahmenteils 28, am Rahmen 14 anzubringenden, nicht dargestellten Zusatzteil angeschweißt sind.

Die Schare 24 der vorderen Reihe sowie die Schare 22 der hinteren Reihe haben üblichen Aufbau. Sie bestehen aus einem hohlen, nach vorne keilig zulaufenden Scharkopf 30, einer Scharstange 32 und einem teleskopartigen Samen-Fallrohr 34. Die Scharstange 32 ist mit ihrem vorderen Ende am Rahmen 14 angelenkt (zur Achse 16 parallele Schwenkachse 36); am in Bezug auf die Fahrtrichtung A hinteren Stangenende befindet sich der Scharkopf 30. Das Fallrohr 34 verbindet die nicht dargestellte Samen-Dosiereinrichtung innerhalb des Samenvorratsbehälters 20 mit dem Scharkopf-Hohlraum. Im Bereich eines unteren hinteren Scharkopf-Ecks ist der Scharkopf 36 mit einer Samen-Abgabeöffnung 38 ausgebildet, aus welcher gemäß Fig. 1 und 4 sowohl während des Normalbetriebes als auch während des Nachsä-Betriebes mit anmontiertem Anbausatz 12 die Samenkörner 40 herausfallen.

Im Normalbetriebszustand werden die Sä-Scharen 22, 24 von nicht dargestellten Boden-Andruckfedern in den Acker gedrückt zur Abgabe der Samenkörner 40 in die von den Sä-Scharköpfen 36 in den lockeren Ackerboden eingeschnittenen Mulden. Sämtliche Sä-Schare 22,24 können von Hand vom Boden abgehoben werden, indem am Griff 42 einer Zugstange 44 gezogen wird, deren griffernes Ende an eine Querstange 46 angreift. Die Querstange 46 läuft parallel zur Achse 16 und ist wenigstens über zwei zueinander parallele Lenker 48 kurbelähnlich am Rahmen 14 angelenkt. Die Scharstangen 22,24 sind jeweils über eine Kette 50 mit der Stange 46 verbunden, so daß bei einem Verschieben der Stange 44 mit dementsprechendem Verschwenken der Stange 46 die Sä-Schare 22 und 24 gleichzeitig entweder angehoben oder abgesenkt werden.

Bei montiertem Anbausatz 12 zum Nachsäen von Grasnarben sind die Sä-Scharen 22, 24 geringfügig angehoben, so daß sie nicht mehr in den Boden hineinreichen. Sie dienen nunmehr als Samen-Abgabeeinrichtungen zur Abgabe der Samen 40 in eine Mulde 52. Diese Mulde 52 ist im Gegensatz zum Normalbetrieb also nicht vom Sä-Scharkopf 30 gebildet worden, sondern von einer vorlaufenden, im folgenden noch näher zu beschreibenden Mulden-Ausformeinrichtung 54 als Teil des Anbausatzes 12. Nach Abgabe der Samen auf den Muldenboden 56 (s.auch Fig. 8) wird der Muldenboden 56 von einem Streichstab 58 einer Boden-Ausgleichseinrichtung 61 wiederum als Teil des Anbausatzes 12 glatt gestrichen mit dem in Fig. 9 gezeigten Ergebnis.

Die allgemein mit 54 bezeichnete Muldenausformeinrichtung besteht aus einem Träger-Profilrohr (Rechteck-Profil) 60, Mulden-Ausformwerkzeugen in Form eines Bodenaufschlitz-Messers 62 und eines nachfolgenden Boden-Öffnungskeils 64, einer Tiefen-Einstellplatte 66 sowie einer im wesentlichen U-förmigen Verlängerung 68 am hinteren Träger-Profilrohrende.

Das Träger-Profilrohr 60 ist mit seinem vorderen Ende am vorderen Anbaurahmenteil 28 in einer rahmenteilfesten Lagergabel 70 um eine zur Achse 16 parallele Schwenkachse 72 schwenkbar gelagert. An die Unterseite des abgeknickten, hinteren Träger-Profilrohrendes ist die Tiefen-Einstellplatte 66 angeschweißt, welche gegenüber der Horizontalen leicht nach vorne oben geneigt verläuft und an ihrem vorderen Ende, entsprechend dem Knick des Träger-Profilrohrs 60, mit einem stärker nach oben geneigten, eine Abweisfläche 72 bildenden Endabschnitt 74 versehen ist.

Das Bodenaufschlitz-Messer 62 liegt in einer zur Fahrtrichtung A parallelen vertikalen Ebene (Zeichenebene der Fig. 2). Mit seiner oberen Längskante ist das Messer 62 an der Unterseite der Tiefen-Einstellplatte 66 auswechelbar angebracht. Die untere Längskante des Messers 62 bildet die Schneidkante 76. Sie ist gemäß Fig. 4 unter einem Winkel $\alpha$ von etwa $10^{o}$ gegenüber der Horizontalen geneigt. Die Messerdicke a beträgt etwa 2mm. Die Messerlänge b beträgt etwa 20 cm. Nach vorne läuft das Messer 76 spitz aus. Die vertikale Hinterkante 78 ist etwa 15 mm. lang. Die Hinterkante 78 bildet gleichzeitig eine Kante des erwähnten Keils 64, und zwar die Keilspitz-Kante. Der Keil 64 hat die Form eines rechten Prismas mit einer in Fig. 5 erkennbaren Grundfläche in Form eines spitzen, gleichschenkeligen Dreiecks 80. Die die Keilspitze bildende Dreiecksspitze liegt in Fahrtrichtung A vorne und die Dreiecksbasis 82 hinten, welche in horizontaler Richtung quer zur Fahrtrichtung A verläuft.

Der Keilwinkel $\beta$ gemäß Fig. 5 beträgt etwa $20^{o}$; die Länge c der Basis 82 und damit die Muldenbreite beträgt etwa 12 mm. Die Höhe d des Keils 46 entspricht der Länge c, so daß sich dementsprechend eine Mulde 52 mit im wesentlichen quadratischem Muldenquerschnitt ergibt. Da die Länge der Hinterkante 78 des Bodenaufschlitz-Messers 62 folglich die Keilhöhe übersteigt, ragt das Bodenaufschlitz-Messer 62 mit seinem hinteren Ende nach unten über den Keil 64 um etwa 3 mm vor. Dies verhindert zuverlässig ein Hängenbleiben von Pflanzenteilen oder anderen Bodenteilen am sich nach hinten aufweitenden Keil 64, da der Keil 64 mit entsprechendem Abstand über diese Teile hinweggleitet. Eine allgemein mit 86 bezeichnete Einstelleinrichtung aus einer Schraubendruckfeder 88 und einer rohrförmigen Druckfeder-Führungsstange 90 drückt auf die rückwärtige Verlängerung 68 der Stange 60, und zwar im Uhrzeigersinn der Fig. 2 derart, daß die Mulden-Ausformwerkzeuge 62, 64 in den Boden so tief einschneiden, daß die Tiefen-Einstellplatte 66 an der Bodenoberseite entlanggleitet. Die Druckfeder 88 umringt die Führungsstange 90 und stützt sich mit ihrem oberen Ende an der Unterseite eines hinteren Anbaurahmenteils 92 ab. Wie Fig. 3 zeigt, ist die Stange 90 frei in einer entsprechenden Aufnahmeöffnung 94 des Rahmenteils 92 verschiebbar; ein über den Stabumfang herausragender Querstift 96 verhindert ein ungewolltes Herausgleiten der Stange 90 nach unten aus der Öffnung 94. Mit ihrem unteren Ende stützt sich die Schraubenfeder 88 an einem die Stange 90 quer durchsetzenden Bolzen 98 ab, welcher in unterschiedlichen Höhen (Einstecklöcher 100) in die Stange 90 einsteckbar ist, um hierdurch unterschiedliche Federvorspannungen einstellen zu können. Die Feder 88 drückt folglich die Stange 90 nach unten. Mit ihrem unteren Ende ist die Stange 90 an der U-förmigen Verlängerung 68 angelenkt, und zwar mittels eines Gelenkbolzens 102, welcher die Schenkel der U-Form sowie die rohrförmige Stange durchsetzt (s. auch Fig. 4 und 5). Der Gelenkbolzen 102 durchsetzt zudem einen Gelenkkopf 106 am vorderen Ende des gebogenen Streichstabs 58. Die Gelenkkopfachse verläuft parallel zur Achse 16, also in horizontaler Richtung und senkrecht zur Fahrtrichtung A.

An der Innenseite eines der beiden Schenkel der U-Form der Verlängerung 68 ist gemäß Fig. 4 ein Abweisblech 108 angeschweißt, welches dafür sorgt, daß die aus der Öffnung 38 des Schar-Kopfes 36 fallenden Körner 40 zuverlässig in die gebildete Mulde 52 fallen. In dieser Stellung der gegenüber ihrer normalen Einsatzposition angehobenen Sä-Schar 22,24 liegt der Schar-Kopf 36 mit seiner Schar-Kopfunterseite 110 auf der Tiefen-Einstellplatte 66 auf, und zwar im Bereich von deren hinterer Querkante. Hierbei durchsetzt der Schar-Kopf 30 die U-Form der Verlängerung 68, so daß deren beide U-Form Schenkel den Kopf 30 quer zur Fahrtrichtung A sichern.

Der Streichstab 58 besteht aus einem Stahlstab mit Kreisquerschnitt, welcher zur Mulde 52 hin gekrümmt ist, um die Samenkörner 40 in den Muldenboden 56 einstreichen zu können (s. Fig. 4,8 und 9). Der Querschnitts-Durchmesser e entspricht im wesentlichen den Abmessungen der quadratischen rückwärtigen Keil-Basisfläche 114 (Fig. 7) und beträgt demzufolge etwa 12 mm. Demzufolge wird der anfänglich horizontal ebene Muldenboden 56 gemäß Fig. 8 in den etwa halbzylindrischen Muldenboden 56' gemäß Fig. 9 umgeformt.

Die für diese Umformung notwendige Kraft wird von einer in Fig. 2 erkennbaren Schrauben-Zugfeder 118 aufgebracht, deren unteres Ende am hinteren Anbau-Rahmenteil 92 befestigt ist und deren oberes Ende an das obere Ende einer Druckstange 120 angreift. Die Druckstange 120 durchsetzt gemäß Fig. 3 eine entsprechende Führungsöffnung 122 des Anbau-Rahmenteils 92. Das untere Ende der Druckstange 120 ist mit dem Streichstab 58 gelenkig verbunden, und zwar mittels eines Gelenkbolzens 124, welcher einen vom Streichstab 58 nach oben abstehenden Gelenkvorsprung 126 durchsetzt. Der Vorsprung 126 befindet sich etwa in der Längenmitte des Stabes 58. Der Gelenkbolzen 124 liegt, bezogen auf die Fahrtrichtung A, zwischen der Anlagestelle 130 am Muldenboden 56 und dem Gelenkbolzen 102 am vorderen Stabende. Dementsprechend übt der von der Zugfeder 118 nach

unten gedrückte Streichstab 58 keine, die Mulden-Ausformeinrichtung 54 vom Boden abzuheben versuchende Kräfte auf diese aus.

Entsprechend der versetzten Anordnung der Sä-Schare 22 und 24 der Drillmaschine 18 sind auch die den einzelnen Sä-Scharen 22,24 zugeordneten Mulden-Ausformeinrichtungen 54 und Streichstäbe 58 versetzt angeordnet. Wie Fig. 3 zeigt, sind dementsprechend die Öffnungen 94,122 wechselseitig versetzt.

Die beiden Anbau-Rahmenteile 28,92 sind über Steck-kupplungen 131,132 mit dem Maschinenrahmen 14 verkoppelt. Jede der Steck-Kupplungen 131,132 besteht aus einem offenen Vierkantrohr 134 als Teil des Maschinenrahmens 14 sowie einem in dieses Vierkantrohr einsteckbaren Vierkant-Vorsprung 136 am jeweiligen Rahmenteil 28 bzw. 92. Ein beide Teile 134,136 durchsetzender Verriegelungsbolzen 138 legt die beiden ineinander gesteckten Teile aneinander axial fest.

Zu Fig. 1 ist noch nachzutragen, daß zur Symbolisierung der Höhen- und/oder Neigungsverstellbarkeit der Drei-Punkt-Ankopplung auf der Zugfahrzeugseite dementsprechende Hydraulikzylinder 140,142 angedeutet sind.

Zur Umstellung der Drillmaschine 10 vom Normalbetrieb auf Nachsä-Betrieb sind als erstes die Sä-Scharen 22, 24 durch entsprechende Betätigung des Handgriffs 42 aus ihrer Eingriffsposition in den Boden soweit anzuheben, daß die jeweils zugeordneten Mulden-Ausformeinrichtungen 54 unter die Schar-Köpfe 30 geschoben werden können, bis die Schar-Köpfe 30 oberhalb der U-förmigen Verlängerungen 68 angeordnet sind. Das vordere Anbau-Rahmenteil 28 wird über die Steck-Kupplungen 131 mit dem Maschinenrahmen 14 verkoppelt, ebenso wie das hintere Anbau-Rahmenteil 92. Anschließend werden die Sä-Scharen 22,24 durch entsprechende Betätigung des Handgriffs 42 abgesenkt, bis schließlich die Schar-Köpfe 30 auf den Tiefen-Einstellplatten 66 aufliegen. Die auf diese Weise umgerüstete Drillmaschine 10 ist bereit zum Nachsäen. Während des Anfahrens schneiden sich die Bodenaufschlitz-Messer 62 sowie die Keile 64 zunehmend in den Boden ein, bis schließlich die Tiefen-Einstellplatten 66 entlang der Bodenoberseite streichen. Die von den Schar-Köpfen 30 abgegebenen Samen werden auf den Muldenboden 56 gemäß Fig. 8 abgelegt und anschließend vom jeweiligen Streichstab 58 in den Muldenboden gestrichen, welcher die Mulden-Form gemäß Fig. 9 annimmt. Die Samenkörner 40 schließen mit dem Muldenboden 56 bündig ab, so daß sich ein guter Bodenschluß mit ausreichender Feuchtigkeitszufuhr ergibt. Die Samenkörner liegen also unmittelbar unter der Muldenoberfläche, so daß der entstehende Keimling sogleich dem Licht ausgesetzt ist, was die Photosynthese stark fördert. In der Mulde 52 kann sich zudem Wasser sammeln, was dem Wachstum wiederum förderlich ist. Der Muldenboden 56 ist derart glatt gestrichen, daß sich eine mittlere Mutterboden-Verdichtung mit Ausbildung von feuchtigkeitsleitenden Kapillaren ergibt. Eine zu starke Verdichtung hätte die Beseitigung derartiger Kapillaren zur Folge.

Der Umbau der Sä-Maschine 10 für normalen Gebrauch geht dementsprechend in umgekehrter Reihenfolge durch Abmontieren der Teile des Anbausatzes 12 vonstatten.

0131763

Fig. 10 bis 12 in Seitenansicht, Schrägansicht und Vorderansicht eine weitere Ausführungsform einer Mulden-Ausformeinrichtung als Austauscheinheit;

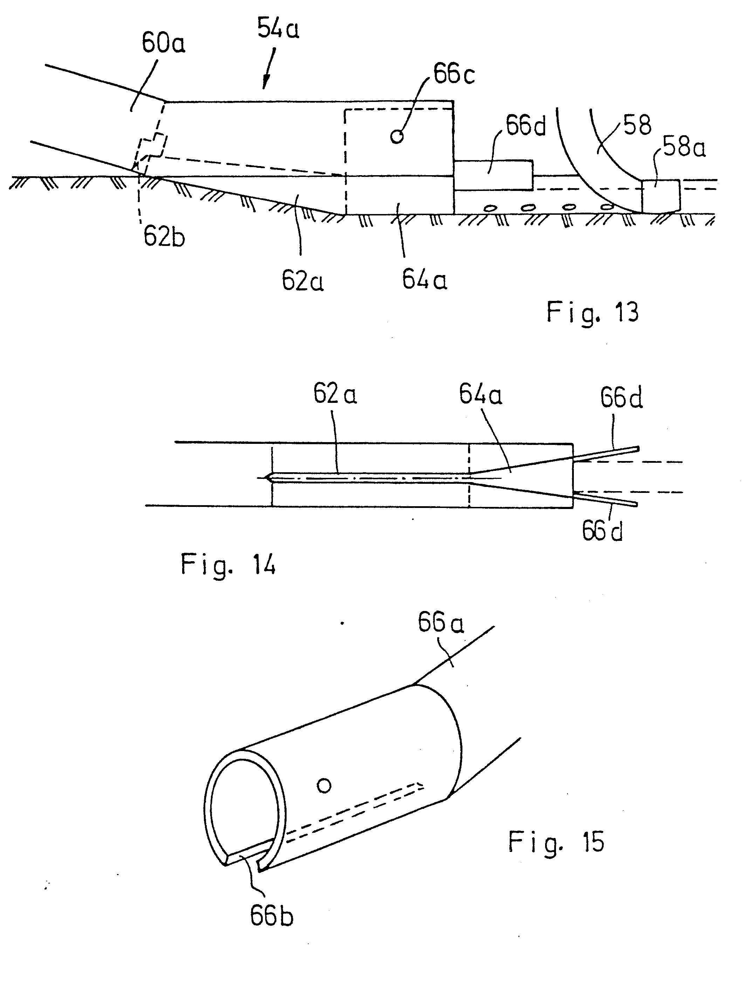

Fig. 13 die Mulden-Ausformeinheit in eingebautem Zustand in einer der Figur 4 entsprechenden Ansicht;

Fig. 14 die Mulden-Ausformeinrichtung nach Figur 11 in Unteransicht entsprechend Figur 6;

Fig. 15 ein Trägerprofilrohr für die Mulden-Ausformeinrichtung in Schrägansicht von vorn;

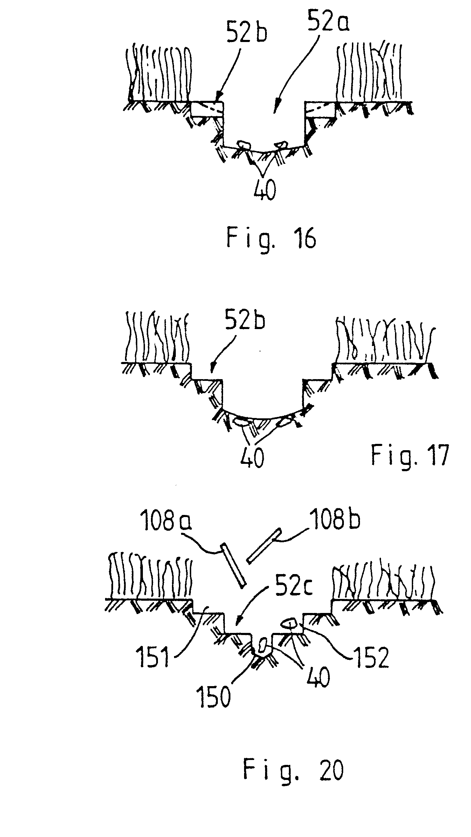

Fig. 16 einen der Figur 8 entsprechenden Schnitt durch die Bodenmulde nach dem Einlegen der Samen;

Fig. 17 einen der Figur 9 entsprechenden Schnitt durch die Bodenmulde nach dem Einstreichen der Samen.

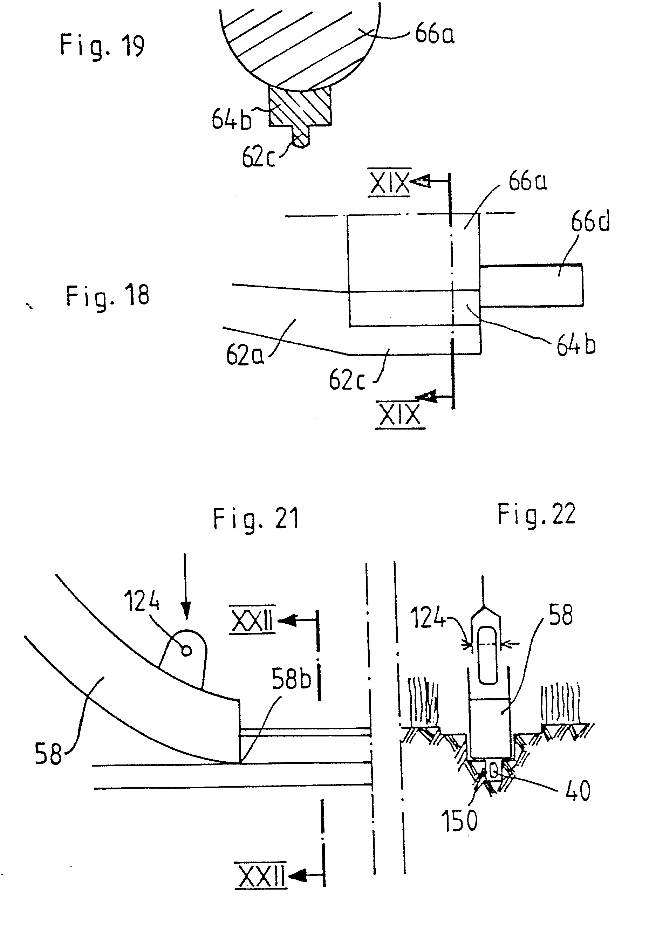

Fig. 18 eine abgewandelte Ausführungsform der Mulden-Ausformeinrichtung nach Figur 10 in Seitenansicht;

Fig. 19 einen Schnitt längs der Linie XXI-XXI in Figur 18;

Fig. 20 einen Schnitt durch eine mit der Mulden-Ausformeinrichtung nach Figur 18 gebildete Bodenmulde mit Samenauffangschlitz;

Fig. 21 und 22 in Seitenansicht und in Ansicht XXI eine abgewandelte Form des Streichstabs.

Die Mulden-Ausformeinrichtung 54a nach Figur 10 ist als Austauscheinheit konzipiert, da sie ein Verschleißteil bildet. Sie hat, wie auch bei dem vorhergehenden Ausführungsbeispiel ein Bodenaufschlitz-Messer 62a und einen Bodenöffnungs-Keil 64a, die beide in ihrer Gestaltung im wesentlichen den Gegenstücken 62 und 64 entsprechen. Im Unterschied hierzu sitzen diese Teile nicht an einer Tiefeneinstellplatte, sondern an einem Steckprofil 66a, das in das Ende des Trägerprofilrohrs 60a eingesetzt und dort fixiert werden kann. Dieses Rohr ist in dieser Ausführungsform rund und bis an das Ende des Bodenöffnungs-Keils 64a verlängert und besitzt auf der Unterseite einen dem Keil und dem Messer angepaßten Schlitz 66b als Führung. Das Steckprofil 66a wird z.B. mittels Splint 66c im Trägerprofilrohr 66a gesichert, wobei für das Ende des Messers 62a ein Anschlag 62b zur Lagefixierung vorgesehen ist. Das seitlich über dem Bodenöffnungs-Keil 64a vorstehende Rohr übernimmt hier die Aufgabe der Tiefeneinstellplatte 66 des vorhergehenden Ausführungsbeispiels.

An der Vorderseite der Mulden-Ausformeinrichtung befindet sich in Verlängerung des Bodenöffnungs-Keils 64a auf jeder Seite eine schrägstehende Lasche 66d. Beide Laschen öffnen sich V-förmig und haben eine solche Lage und Höhe, daß sie etwa um die Hälfte ihrer Höhe über Oberkante Boden vorstehen und mit der anderen Hälfte ihrer Höhe in die Bodenmulde 62a eintauchen und den oberen Rand 52b der Mulde 52a seitlich wegdrucken, wie dies aus Figuren 16 und 17 erkennbar ist; hierdurch wird der Randbewuchs der Bodenmulde weggedruckt und gewährleistet, daß die Mulden möglichst lange offenbleiben, also weder zu schnell durch den vorhandenen Bewuchs überwachsen oder durch sich aufrichtendes Gras zugedeckt werden.

Der besondere Erfolg der erfindungsgemäßen Arbeitsweise liegt in der möglichst langen Offenhaltung der Bodenmulden 52, 52a, damit die Samen 40 optimale Wachstums- bedingungen behalten. Die Mulden sind etwa 1 bis 1 1/2 cm tief und 1 cm breit, wobei der Rand auf einer Breite von etwa 1 cm und einer Tiefe von etwa 0,5 cm seitlich weggedrückt wird.

Von besonderem Vorteil ist es, wenn der Streichstab 58 die Muldenränder nicht zu sehr glättet. Hierfür kann am Ende des Streichstabs 58 ein Gummikeil 58a aufgesetzt werden, der die Muldenwände soweit aufrauht, daß Kapillarwirkung zur Außenluft unterbunden und die Feuchtigkeitshaltung im Boden verbessert wird. Vorteilhaft besteht der Gummikeil aus einem Laminat aus Gummi und Leinwand.

Alle anderen am ersten Ausführungsbeispiel erläuterten Einrichtungen für die Anbringung und Stützung am Rahmen 14 sind die gleichen wie im Falle der Ausführungsform nach Figuren 1 bis 7.

Im Falle der Ausführungsform nach Figuren 18 und 19 ist der Boden-öffnungskeil 64b in seiner Höhe halbiert und nach unten durch eine Fortsetzung 62c des Bodenaufschlitz-Messers 62a verlängert, so daß in den Muldenboden eine Samenauffangrille 150 geschnitten wird, deren Breite und Höhe jeweils etwas größer als die Abmessung der zu verlegenden Samen 40 gewählt wird. Diese Rille hat vorteilhaft eine Breite und eine Tiefe von jeweils 5 mm, während die eigentliche Mulde 52c gegenüber der- jenigen nach Figuren 16 und 17 nur die halbe Tiefe, also eine Tiefe von ca. 0,5 cm hat. Es ergibt sich also entsprechend Figur 20 eine Bodenmulde 52c, deren Ränder mit Hilfe der Streichlaschen 66d bei 151 zurückgedrängt sind und deren Boden eine Samenauffangrille 150 besitzt. Zweckmäßig wird die Samenabgabe durch geeignet gestellte Leitbleche 108a, 108b so gesteuert, daß die Samen in die Samenauffangrille geleitet werden. Die Samen befinden sich dann an einer Stelle, die am längsten der Lichteinwirkung ausgesetzt ist, d.h. am spätesten zuwächst. Die so abgelegten Samen haben die besten Keimbedingungen.

Auf dem Boden der Mulde bei 152 abgelegte Samen werden mit Hilfe des Streichstabs 58, vorzugsweise mit Hilfe des Streichstabs mit Gummikeil 58a nach Figur 13 oder mit gerader Abreißkante 58b nach Figur 21 in das Erdreich eingestrichen. Im letzteren Fall ist der Streichstab gemäß Figuren 21 und 22 in der Nähe des Lastangriffspunkts 124 (Figur 4) abgeschnitten, so daß er nur mit seiner vorderen Kante 58b über den Muldenboden streicht und ihn auf diese Weise aufrauht. Die gekrümmte Unterseite des Streichstabs läuft also leicht geneigt zur Horizontalen in den Endquerschnitt des Stabs aus. Zweckmäßig sind die Querschnittabmessungen des Endquerschnitts etwas größer als der Muldenquerschnitt, so daß eine leichte Verfestigung der Oberfläche der Mulde und damit eine Erhöhung der Standfestigkeit der Seitenränder erreicht wird.

Vertret
Dipl.-In
Dipl.-Cl
Dipl.-In     0131763
Dipl.-Ing P. Grupe
Dipl.-Ing. B. Pellmann
Dipl.-Ing. K. Grams
Dipl.-Chem. Dr. B. Struif

Bavariaring 4, Postfach 20 24 03
8000 München 2
Tel.: 0 89 - 53 96 53
Telex: 5-24 845 tipat
Telecopier: 0 89 - 537377
cable: Germaniapatent München

14. Juni 1984
EP 4027

Patentansprüche

1. Sä-Vorrichtung zum Säen von Feinsämereinen in verfestigtem Mutterboden, insbesondere zum Nachsäen
lückiger Grasflächen, insbesondere zur Durchführung
des Verfahrens nach Patentanspruch 36, mit einer
oder mehreren Sä-Einheiten, jeweils umfassend eine
Samen-Abgabeeinrichtung (22, 24) eine der Samen-
Abgabeeinrichtung vorlaufende Mulden-Auformeinrichtung (54) und eine der Samen-Abgabeeinrichtung nachlaufende Boden-Ausgleichseinrichtung (61), wobei
die Samen (40) von der Samen-Abgabeeinrichtung (22,
24) auf den Boden (56) der von der jeweiligen Mulden-
Ausformeinrichtung (54) gebildeten Mulde (52) abgegeben werden, dadurch gekennzeichnet, daß die Boden-
ausgleichseinrichtung (61) ein dem Mulden-Ausschnitt
wenigstens angenähert angepaßtes Muldenboden-Druckelement (58) zum Einstreichen der Samen (40) in den
Muldenboden (56) und Offenhalten des von der Mulden-
Ausformeinrichtung gebildeten Boldenmulde umfaßt.

Dresdner Bank (München) Kto 3939844     Deutsche Bank (München) Kto 2861060     Postscheckamt (München) Kto 670 - 43 - 804

I / 4

2. Sä-Vorrichtung nach Anspruch 1, dadurch g e k e n n - z e i c h n e t , daß das Muldenboden-Druckelement von einer Boden-Andruckrolle gebildet ist mit dem Muldenquerschnitt wenigstens angenähert ange- paßtem Rollenquerschnitt.

3. Sä-Vorrichtung nach Anspruch 1, dadurch g e k e n n - z e i c h n e t , daß das Muldenboden-Druckelement von einer entlang des Muldenbodens (56) streichenden Gleitkufe gebildet ist, vorzugsweise in Form eines Streichstabs (58), mit dem Muldenquerschnitt wenigstens angenähert angepaßtem, vorzugsweise kreisförmigem Stabquerschnitt und mit im wensentlichen parallel zur Fahrtrichtung (A) der Sä-Vorrichtung (10) verlaufender Stablängsrichtung.

4. Sä-Vorrichtung nach Anspruch 3, dadurch g e k e n n - z e i c h n e t , daß der Streichstab (58) wenigstens abschnittsweise um eine im wesentlichen horizontale und quer zur Fahrtrichtung verlaufende Achse zum Muldenboden (56) hin gekrümmt ausgebildet ist.

5. Sä-Vorrichtung nach einem der vorhergehenden Ansprüche, dadurch g e k e n n z e i c h n e t , daß das Muldenboden-Druckelement (58) an der Sä-Vorrichtung, vorzugsweise an der Mulden-Ausformeinrichtung (54), tiefenverstellbar angebracht ist, vorzugsweise dadurch, daß das Muldenboden-Druckelement (58) an der Sä- Vorrichtung bzw. Mulden-Ausformeinrichtung (54) um eine im wesentlichen horizontale, quer zur Fahrtrichtung (A) verlaufende Achse verschwenkbar angebracht ist.

6. Sä-Vorrichtung nach Anspruch 5, dadurch g e k e n n - z e i c h n e t , daß zur Einstellung eines Schwenkwinkels eine Einstelleinrichtung (118,120) an das Muldenboden-Druckelement (58) im Abstand von der Schwenkachse (102) angreift, vorzugsweise unter Federvorspannung im Sinne einer größeren Tiefen-Einstellung des Muldenboden-Druckelements (58).

7. Sä-Vorrichtung nach Anspruch 6, dadurch g e k e n n - z e i c h n e t , daß die Einstelleinrichtung eine Druckstange (120) umfaßt, welche mit dem Muldenboden-Druckelement (58) gelenkig verbunden ist und sich vorzugsweise an einem Sä-Vorrichtungsrahmen (92) abstützt, vorzugsweise unter Zwischenschaltung einer Schraubenfeder (118).

8. Sä-Vorrichtung nach einem der vorhergehenden Ansprüche, dadurch g e k e n n z e i c h n e t , daß die Mulden-Ausformeinrichtung (54) einen Bodenöffnungs-Keil (64) aufweist mit vorlaufender, vertikaler Keilspitz-Kante und den Muldenquerschnitt bestimmender, vorzugsweise im wesentlichen rechteckiger Keil-Basisfläche (114).

9. Sä-Vorrichtung nach Anspruch 8, dadurch g e k e n n - z e i c h n e t , daß die Mulden-Ausformeinrichtung (54) ein in einer die Keilspitz-Kante enthaltenden, zur Fahrtrichtung (A) parallelen Ebene liegendes, flaches Bodenaufschlitz-Messer (62) aufweist, deren Schneidkante (76) schräg nach oben und in Fahrtrichtung (A) nach vorne verläuft und deren auf das rückwärtige Ende der Schneidkante (76) folgende Hinterkante (78) parallel zur Keilspitz-Kante verläuft und vorzugsweise mit dieser zusammenfällt.

10. Sä-Vorrichtung nach Anspruch 9, dadurch g e k e n n - z e i c h n e t , daß das rückwärtige Ende der Schneidkante (76) tiefer liegt als das untere Ende der Keilspitz-Kante.

11. Sä-Vorrichtung nach Anspruch 9 oder 10, dadurch g e k e n n z e i c h n e t , daß der Neigungswinkel der Schneidkante (62) im Bereich des aufgeschlitzten Bodens gegenüber der Horizontalen etwa 5 - 30°, vorzugsweise etwa 8 - 20°, am besten etwa 10° beträgt.

12. Sä-Vorrichtung nach einem der vorhergehenden Ansprüche, dadurch g e k e n n z e i c h n e t , daß die Mulden-Ausformeinrichtung (54) eine vom Muldenboden-Druckelement (58) unabhängige Tiefen-Einstelleinrichtung aufweist, vorzugsweise in Form einer auf dem Boden seitlich der Mulde (52) aufliegenden Tiefen-Einstellplatte (66).

13. Sä-Vorrichtung nach Anspruch 12, dadurch g e k e n n z e i c h n e t , daß an der Unterseite der Tiefen-Einstellplatte (66) der Boden-Öffnungskeil (64) und/oder das Bodenaufschlitz-Messer (62) angebracht sind.

14. Sä-Vorrichtung nach einem der vorhergehenden Ansprüche, dadurch g e k e n n z e i c h n e t , daß die Mulden-Ausformeinrichtung (54) einen die Mulden-Ausformwerkzeuge, ggf. den Boden-Öffnungskeil (64) und das Bodenaufschlitz-Messer (62) tragenden, in Fahrtrichtung (A) länglichen Träger, vorzugsweise in Form eines Trägerprofilrohrs (60), umfaßt, welches mit seinem in Fahrtrichtung (A) vorderen Längsende an der Sä-Vorrichtung (10) um eine horizontale, quer zur Fahrtrichtung verlaufende Achse (72) verschwenkbar angebracht ist und an dessen hinteres Längsende eine vorzugsweise im Sinne einer größeren Tiefen-Einstellung vorgespannte Einstell-Einrichtung (86) angreift.

15. Sä-Vorrichtung nach Anspruch 14, dadurch g e k e n n -
z e i c h n e t , daß die Mulden-Ausformwerkzeuge im
Bereich des hinteren Längsendes des Trägerprofilrohres
(60) angebracht sind, und daß die Einstelleinrichtung
(86) an einer rückwärtigen Verlängerung (68) des
Trägerprofilrohres (60) angreift.

16. Sä-Vorrichtung nach Anspruch 15, dadurch g e k e n n -
z e i c h n e t , daß die Verlängerung (60) von einem
im wesentlichen U-förmigen, das untere Ende (30) der
Samen-Ablageeinrichtung (22,24) umgreifenden Blechstreifen gebildet ist.

17. Sä-Vorrichtung nach einem der Ansprüche 14 - 16,
dadurch g e k e n n z e i c h n e t , daß die
Einstelleinrichtung (86) eine Boden-Druckfeder (88)
umfaßt, welche zwischen Träger (60) und der Sä-
Vorrichtung (10) wirkt, und daß eine die Boden-
Druckfeder (88) durchsetzende Druckfeder-Führungsstange (90) vorgesehen ist, welche am Träger (60)
schwenkbar angebracht ist.

18. Sä-Vorrichtung nach Anspruch 11, dadurch g e k e n n -
z e i c h n e t , daß sich Boden-Druckfeder (88)
einerseits an der Sä-Vorrichtung (10) abstützt und
andererseits an einem Kraftangriffspunkt (98) am
Außenumfang der Führungsstange (90), welcher zur Veränderung der Federvorspannung in Richtung der Führungsstangenachse verlagerbar ist.

19. Sä-Vorrichtung nach einem der vorhergehenden Ansprüche,
dadurch g e k e n n z e i c h n e t , daß die
Mulden-Ausformeinrichtung (54) sowie die Boden-
Ausgleichseinrichtungen (61) als von der Sä-Vorrichtung (10) lösbare Anbauteile ausgebildet sind.

20. Sä-Vorrichtung nach Anspruch 19, g e k e n n - z e i c h n e t durch einen ein- oder mehrteiligen Anbaurahmen (28,92), an welchem sämtliche Mulden-Ausformeinrichtungen (54) sowie sämtliche Boden-Ausgleichseinrichtungen (61) angebracht sind.

21. Sä-Vorrichtung nach Anspruch 20, dadurch g e k e n n - z e i c h n e t , daß der Anbaurahmen (28,92) über Steck-Kupplungen (131,132) mit der Sä-Vorrichtung (10), ggf. einem Sä-Vorrichtungsrahmen (14) verbindbar ist.

22. Sä-Vorrichtung nach Anspruch 20 oder 21, g e k e n n - z e i c h n e t durch ein vorderes Anbau-Rahmenteil (28), vorzugsweise in Form eines horizontalen und quer zur Fahrtrichtung verlaufenden Profilrohrs, an welchem Anbau-Rahmenteil (28) und sämtliche Mulden-Ausformeinrichtungen (54) angelenkt sind.

23. Sä-Vorrichtung nach Anspruch 22, dadurch g e k e n n - z e i c h n e t , daß das vordere Anbau-Rahmenteil (28) mit Ankoppelelementen (26) für ein Zugfahrzeug ausgebildet ist, welche vorzugsweise die beiden unteren beiden Ankoppelpunkte einer Drei-Punkt-Ankopplung bilden.

24. Sä-Vorrichtung nach einem der Ansprüche 20 - 23, g e k e n n z e i c h n e t durch ein hinteres Anbau-Rahmenteil (92), vorzugsweise in Form eines Rechteck-Rahmens, an welchem Anbau-Rahmenteil, sämtliche Einstell-Einrichtungen (86) der Mulden-Ausformeinrichtungen (54) sowie der Boden-Ausgleichseinrichtungen (60), ggf. die Druckfeder-Führungsrohre (90) sowie die Druckstangen (120) ggf. verschiebbar gehaltert sind.

25. Sä-Vorrichtung nach einem der Ansprüche 19 - 24, dadurch g e k e n n z e i c h n e t , daß die Sä-Vorrichtung (10) mit Sä-Scharen (22,24) versehen ist, welche ein Säeen auch ohne die Anbauteile (54,60) erlaubt, daß die Sä-Schare (22,24) bei anmontierten Anbauteilen (54,61) vom Boden abhebbar sind und in dieser angehobenen Stellung vorzugsweise als die Samen-Abgabeeinrichtungen dienen.

26. Sä-Vorrichtung nach Anspruch 25, dadurch g e k e n n - z e i c h n e t , daß die Mulden-Ausformeinrichtung (54) mit einer Anlagefläche, vorzugsweise im Bereich des Boden-Öffnungskeils (64), für eine jeweils zugeordnete Sä-Schar (22,24) ausgebildet ist, welche bei Anlage an die Anlagefläche derart angehoben ist, daß sie nicht in den von der vorlaufenden Mulden-Ausformeinrichtung (54) gebildeten Muldenboden (56) eindringt, und daß die von der Sä-Schar (22,24) abgegebenen Samen (40) auf den Muldenboden (56) fallen.

27. Sä-Vorrichtung nach Anspruch 26, dadurch g e k e n n - z e i c h n e t , daß an der Mulden-Ausformeinrichtung (56) ein Abweisblech (108) angebracht ist, welches die von der jeweils angehobenen Sä-Schar (22,24) abgegebenen Samen (40) zum Muldenboden (56) leitet.

28. Sä-Vorrichtung nach einem der Ansprüche 1 - 27, dadurch g e k e n n z e i c h n e t , daß die Mulden-Ausformein- richtung (54) zur Ausformung einer Mulde (52) mit einer Muldenbreite (c) und einer Muldentiefe (d), jeweils von 5 - 20 mm, vorzugsweise 10 - 15 mm, am besten etwa 12 mm ausgebildet ist.

29. Anbausatz für Sä-Maschinen zum Erhalt einer Sä-Vorrichtung nach einer der vorhergehenden Ansprüche, gekennzeichnet durch an die Sä-Maschine anbaubare Mulden-Ausformeinrichtungen (54) und Boden-Ausgleichseinrichtungen (61) entsprechend der Sä-Vorrichtung, nach einem der vorhergehenden Ansprüche.

30. Anbausatz nach Anspruch 29, gekennzeichnet durch einen ein- oder mehrteiligen Anbaurahmen (28,92) entsprechend der Sä-Vorrichtung, nach einem der Ansprüche 20 - 27.

31. Sä-Vorrichtung nach einem der vorhergehenden Ansprüche 3 bis 30, dadurch gekennzeichnet, daß der Streichstab (58) am Ende einen der Muldenform angepaßten Gummikeil (58a) trägt.

32. Sä-Vorrichtung nach Anspruch 31, dadurch gekennzeichnet, daß der Gummikeil (58a) aus einem Laminat aus Gummi und rauhen Leinwandschichten besteht.

33. Sä-Vorrichtung nach einem der vorhergehenden Ansprüche 3 bis 30, dadurch gekennzeichnet, daß die gekrümmte Unterseite des Streichstabs (58) leicht geneigt zur Horizontalen in den Endquerschnitt des Streichstabs ausläuft, wobei sich dieser Endquerschnitt in der Nähe des Angriffspunkts der Druckstange (120) befindet.

34. Sä-Vorrichtung nach Anspruch 33, dadurch gekennzeichnet, daß zumindest der Endquerschnitt des Streichstabs etwas größer als der Muldenquerschnitt ist.

35. Sä-Vorrichtung nach einem der vorhergehenden Ansprüche 8 bis 32, dadurch gekennzeichnet, daß als Tiefeneinstelleinrichtung das Trägerprofilrohr nach vorn bis zum Ende des Bodenöffnungs-Keils (64a) verlängert ist und die Muldenausformeinrichtung (54) einen dem Innenprofil des Trägerprofilrohrs (60a) entsprechenden Steckkörper (66a) besitzt, an dem unten das Bodenaufschlitzmesser (62a) und der Bodenöffnungs-Keil (64a) angebracht sind, wobei das Trägerprofilrohr über die Länge von Messer und Keil geschlitzt (Schlitz 66b) und mit Fixierungseinrichtungen (66c, 62b) für die Mulden-Ausformeinrichtung versehen ist.

36. Sä-Vorrichtung nach Anspruch 33, dadurch gekennzeichnet, daß das Trägerprofilrohr rund ist.

37. Sä-Vorrichtung nach einem der vorhergehenden Ansprüche 8 bis 36, dadurch gekennzeichnet, daß in Verlängerung des Bodenöffnungs-Keils (64a) zwei V-förmig öffnende Streichlaschen 66d für das Zurückdrängen der Grasnarbe an den oberen Rändern der Bodenmulde (52a) vorgesehen sind.

38. Sä-Vorrichtung nach einem der vorhergehenden Ansprüche 8 bis 37, dadurch gekennzeichnet, daß der Bodenöffnungskeil (64b) in seiner Höhe auf die halbe Messerhöhe reduziert und das Messer bis zum vorderen Ende des Keils verlängert ist.

39. Sä-Vorrichtung nach Anspruch 38, dadurch gekennzeichnet, daß Keil (64b) und Messer (62c) gemeinsam eine Höhe von 1 bis 1,5 cm haben.

40. Sä-Vorrichtung nach einem der vorhergehenden Ansprüche, dadurch gekennzeichnet, daß die Messerbreite ca. 0,5 cm und die größte Keilbreite ca. 1 bis 1,5 cm beträgt.

41. Verfahren zum Säen von Feinsämereien in verfestigten Mutterboden, insbesondere zum Nachsäen lückiger Grasflächen, bei dem maschinell in einem Arbeitsgang in die Grasfläche Mulden eingeschnitten und nach Aufweiten der Mulden Samen in den Muldenboden abgelegt werden, dadurch gekennzeichnet, daß die Samen unter gleichzeitiger Stabilisierung der Muldenwände in den Muldenboden eingedrückt und die Mulden offengelassen werden.

42. Verfahren nach Anspruch 41, dadurch gekennzeichnet, daß Boden und Seitenwände der Mulde aufgerauht werden.

43. Verfahren nach Anspruch 41 oder 42, dadurch gekennzeichnet, daß der Muldenboden mittig mit einem Samenauffangschlitz versehen wird.

Fig.1

Fig.2

# Fig.3

0131763

Fig.4

Fig.5

0131763

0131763

## Fig. 6

## Fig. 7

## Fig. 8

## Fig. 9

54a

66a

66d

62a

64a

Fig. 10

60a

66a

66c

66d

66d

64a

Fig. 12

66a

62a

66d

64a

Fig. 11

0131763

Fig. 13

Fig. 14

Fig. 15

Fig. 16

Fig. 17

Fig. 20

Fig. 19

66a

64b

62c

XIX

66a

66d

Fig. 18

62a

62c

64b

XIX

Fig. 21

124

XXII

58b

58

XXII

Fig. 22

124

58

40

150